# EUROPÄISCHE PATENTSCHRIFT

(11) **EP 0 908 388 B1**
(45) Veröffentlichungstag und Bekanntmachung des Hinweises auf die Patenterteilung: **18.07.2001**
(21) Anmeldenummer: 98118726.3
(22) Anmeldetag: 02.10.1998
(51) Int. Cl.: B65B 59/00, B65G 17/26

(54) **Fördervorrichtung in einer Verpackungsmaschine**
Conveying device in a packaging machine
Dispositif de transport dans une machine d'emballage

(30) Priorität: 08.10.1997 DE 19744416
(43) Veröffentlichungstag der Anmeldung: 14.04.1999
(73) Patentinhaber: IWK Verpackungstechnik GmbH, 76297 Stutensee-Blankenloch (DE)
(72) Erfinder: Plüschow, Dieter, 76279 Stetunsee (DE); Dreizler, Walter, 76827 Minfeld (DE)
(74) Vertreter: Lasch, Hartmut Dipl.-Ing.

(56) Entgegenhaltungen:
- EP-A- 0 485 762
- EP-A- 0 676 331
- DE-A- 1 586 057

## Beschreibung

Die Erfindung betrifft eine Fördervorrichtung in einer Verpackungsmaschine, mit mehreren endlos umlaufenden Zugmitteln, die jeweils über zumindest ein Antriebsrad verlaufen, wobei die Antriebsräder auf einer sie tragenden Welle in Umfangsrichtung relativ zueinander verstellbar sind.

In einer Verpackungsmaschine, insbesondere in einer Kartoniermaschine für Faltschachteln, sind verschiedene Zugmittel beispielsweise in Form von Förderketten vorgesehen, um das Füllgut, d.h. die zu verpackenden Produkte, die Faltschachteln und gegebenenfalls die der Verpackung beizufügenden Prospekte durch die Maschine zu befördern. Dabei ist es für die Funktion und Leistungsfähigkeit der Verpackungsmaschine wesentlich, daß die Relativbewegungen der Ketten aufeinander exakt abgestimmt sind, was in der Regel durch die genaue Ausrichtung von Kettenrädern der jeweiligen Ketten auf einer gemeinsamen Welle erreicht wird.

In gleichartiger Weise können als Zugmittel statt der Ketten auch Zahnriemen mit entsprechenden Antriebsrädern in Form von Riemenscheiben verwendet werden, die durch die Erfindung ausdrücklich mit umfaßt sein sollen.

Wenn die Verpackungsmaschine auf eine andere Art und Größe des Füllgutes und somit der Faltschachtel umgestellt werden soll, müssen die Antriebsräder auf der gemeinsamen Welle relativ zueinander neu ausgerichtet werden. Zu diesem Zweck ist es bekannt, zumindest ein Antriebsrad auf der Welle über eine Schraubklemmung lösbar zu halten, so daß nach Lösen der Klemmschrauben eine manuelle Verstellung des Antriebsrades in Umfangsrichtung, d.h. eine Drehung des Antriebsrades möglich ist. Nachdem das Antriebsrad auf die gewünschte Drehposition eingestellt ist, wird es durch Anziehen der Klemmschrauben wieder an der Welle fixiert siehe z.ß EP-A-485762. Dieses Vorgehen ist jedoch sehr zeitaufwendig und relativ unpräzise.

Aus der DE 43 14 632 C2 ist es bekannt, den verstellbaren Kettenrädern, die frei drehbar auf einer Zentralwelle angeordnet sind, jeweils ein eigenes koaxiales Zahnrad zuzuordnen, das mit einem auf einer parallel zur Zentralwelle angeordneten Nebenwelle sitzenden Antriebszahnrad in Eingriff steht, wobei die Zentralwelle und die Nebenwelle über ein Getriebe synchron angetrieben werden können. Das die beiden Wellen antreibende Getriebe umfaßt ein drehfest auf der Zentralwelle sitzendes Antriebsrad und ein drehbar auf der Nebenwelle sitzendes Antriebsrad, dem eine pneumatische Schaltkupplung zugeordnet ist. Bei Betätigung der Schaltkupplung wird eine Kupplungshülse aktiviert, die die Nebenwelle mit dem auf ihr gelagerten Antriebsrad drehfest verspannt. Zur Verstellung der Kettenräder kann die Nebenwelle mittels der Schaltkupplung vom Antrieb abgekoppelt werden, so daß über den Antrieb eine Relativbewegung der Kettenräder möglich ist. Der bei dieser Vorrichtung notwendige konstruktive Aufwand ist jedoch sehr groß und insbesondere benötigen die Nebenwellen und der zusätzliche Antrieb einen relativ großen Bauraum in der Verpackungsmaschine.

Der Erfindung liegt die Aufgabe zugrunde, eine Fördervorrichtung in einer Verpackungsmaschine der genannten Art zu schaffen, bei der die Relativverstellung der Antriebsräder in einfacher und präziser Weise unter nur geringem Platzbedarf möglich ist.

Diese Aufgabe wird erfindungsgemäß bei einer Fördervorrichtung der genannten Art durch eine hydraulische Spannvorrichtung, mittels der die Antriebsräder in Umfangsrichtung relativ zueinander festlegbar sind, und durch eine Löseeinheit gelöst, mittels der die Spannvorrichtung deaktivierbar ist.

Bei den Antriebsrädern kann es sich entweder um Kettenräder oder um Riemscheiben handeln, wobei die Zugmittel dann entsprechend von Ketten bzw. Zahnriemen gebildet sind.

In einer bevorzugten Ausgestaltung sind die Antriebsräder auf einer gemeinsamen durchgehend ausgebildeten Welle angeordnet, wobei zumindest eines der Antriebsräder mittels der hydraulischen Spannvorrichtung radial auf die Welle gespannt werden kann. Um die Antriebsräder relativ zueinander zu verstellen, ist es somit lediglich notwendig, den Hydraulikdruck der Spannvorrichtung soweit abzusenken, daß die Verbindung bzw. Verspannung zwischen dem Antriebsrad und der Welle gelöst ist. Die Relativverstellung der Antriebsräder kann dann durch den Zentralantrieb der Verpackungsmaschine erreicht werden, mittels dessen die Welle gedreht werden kann. Das gelöste Antriebsrad bleibt dabei stehen, wodurch die Relativbewegung erreicht wird. Auf diese Weise ist für die Verstellung keine zusätzliche Antriebsvorrichtung notwendig, wodurch der konstruktive Aufbau vereinfacht ist.

Statt das verstellbare Antriebsrad mittels der hydraulischen Spannvorrichtung radial auf die Welle zu spannen, kann in alternativer Ausgestaltung auch vorgesehen sein, daß die Antriebsräder auf koaxial angeordneten Wellenteilen angeordnet sind, die mittels der hydraulischen Spannvorrichtung relativ zueinander festlegbar sind und nach Lösen der Verspannung in Umfangsrichtung relativ zueinander verstellt werden können. Durch Verstellung der koaxialen Wellenteile werden auch die an ihnen jeweils befindlichen Antriebsrädern relativ zueinander verstellt, wodurch die Formatanpassung erreicht wird. Auch hierbei kann für die Verstellung der Zentralantrieb der Maschine, auf den gegebenenfalls manuell oder motorisch eingewirkt wird, verwendet werden.

In bevorzugter Ausgestaltung der Erfindung ist vorgesehen, daß die hydraulische Spannvorrichtung einen druckbelasteten Kolben und einen in eine Druckkammer mündenden Hydraulikkanal aufweist, wobei der Druckkammer ein Spannelement zugeordnet ist, das mittels des in der Druckkammer herrschenden Druckes gegen die Welle spannbar ist. Durch Verschiebung des Kolbens kann der Hydraulikdruck in dem Hydraulikkanal in bekannter Weise variiert werden. Eine konstruktiv besonders einfache Ausgestaltung ergibt sich, wenn der Kolben von einer Feder beaufschlagt ist, die den Hydraulikdruck und somit die notwendigen Spannkräfte bestimmt.

Wenn das verstellbare Antriebsrad direkt auf die Welle radial aufgespannt wird, sollte die Druckkammer in dem Antriebsrad ausgebildet sein. Wenn zwei koaxial angeordnete Wellenteile mittels der hydraulischen Spannvorrichtung verspannt werden sollen, kann in bevorzugter Ausgestaltung der Erfindung an einem der Wellenteile eine Spannhülse befestigt sein, in die das andere Wellenteil drehbar eingesetzt ist. In der Spannhülse ist die Druckkammer ausgebildet, so daß die Spannhülse bei entsprechendem hydraulischen Druck fest mit dem eingesetzten Wellenteil verbunden werden kann.

In Weiterbildung der Erfindung ist vorgesehen, daß die Spannhülse gleichzeitig auch ein Antriebsrad trägt, wodurch der konstruktive Aufwand gering gehalten ist.

Die Spannkräfte können auf die Welle bzw. das Wellenteil punktuell aufgebracht werden, wobei dann vorzugsweise über den Umfang der Welle eine Vielzahl von Spannpunkten vorgesehen sind. Als besonders vorteilhaft hat es sich erwiesen, wenn die Druckkammer eine die Welle umgebende Ringkammer ist, so daß an der Welle über den Umfang ein gleichmäßiger, radial nach innen gerichteter Druck ansteht. Dabei kann eine großflächige Anlage und somit eine gleichmäßige Aufbringung der Spannkraft erreicht werden, wenn zwischen der Druckkammer und der Oberfläche der Welle eine Membran angeordnet ist, die sich bei erhöhtem hydraulischem Druck an die Außenoberfläche der Welle anlegt.

Grundsätzlich kann der Hydraulikkanal jeden beliebigen Verlauf zwischen dem Kolben, durch den der hydraulische Druck bestimmt wird, und der Druckkammer nehmen. Insbesondere können auch zur Druckkammer führende Leitungen, beispielsweise, vorgesehen sein. Eine besonders platzsparende und gegen äußere Einflüsse unanfällige Lösung ist jedoch gegeben, wenn der Hydraulikkanal axial innerhalb der Welle verläuft, wobei auch dann die Feder in einer in der Welle ausgebildeten Federkammer angeordnet sein kann.

Wenn das verstellbare Antriebsrad bzw. das verstellbare Wellenteil durch Deaktivierung der hydraulischen Spannvorrichtung von der Welle gelöst ist und die Verstellung durch Aktivierung des zentralen Antriebs der Verpackungsmaschine durchgeführt wird, sollte eine unbeabsichtigte Verstellung des gelösten Antriebsrades infolge von Vibrationen oder Reibung etc. vermieden werden. Dies wird in Ausgestaltung der Erfindung dadurch erreicht, daß das verstellbare Antriebsrades in der von der Welle gelösten Stellung mittels einer Haltevorrichtung arretierbar ist, wobei es sich beispielsweise um in das Antriebsrad eingreifende Bremsbacken oder Arretierungsstifte handeln kann.

Im folgenden wird ein Ausführungsbeispiel unter Bezugnahme auf die Zeichnung näher erläutert. Es zeigen:
- Figur 1: einen Längsschnitt durch eine Welle einer Fördervorrichtung einer Verpackungsmaschine gemäß einem ersten Ausführungsbeispiel,
- Figur 2: eine Figur 1 entsprechende Darstellung eines zweiten Ausführungsbeispiels und
- Figur 3: eine Figur 1 entsprechende Darstellung eines dritten Ausführungsbeispiels.

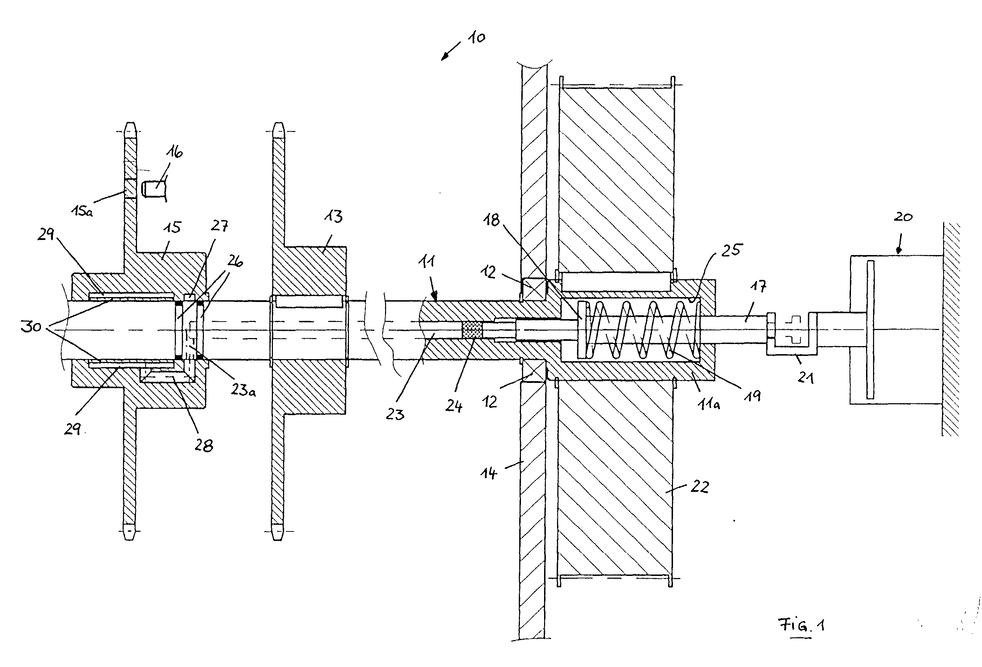

Figur 1 zeigt eine Welle 11 einer Fördervorrichtung 10 einer Verpackungsmaschine, wobei die Welle 11 über Lager 12 in einer Gehäusewand 14 drehbar gelagert ist. Die weiteren Lager der Welle 11 sind in Figur 1 nicht dargestellt. Auf der Welle 11 sind zwei Antriebsräder in Form von Kettenrädern 13 und 15 einer Füllgutkette oder Faltschachtelkette gelagert. Das Kettenrad 13 ist fest mit der Welle 11 verbunden, während das Kettenrad 15 in axialer Richtung an der Welle 11 festgelegt, jedoch um diese drehbar ist.

Auf der Außenseite der Gehäusewand 14 ist an einem verbreiterten Abschnitt lla der Welle 11 eine Riemenscheibe 22 fest angebracht, über die ein nicht dargestellter Riemen verläuft. In dem verbreiterten Abschnitt 11a der Welle 11 ist eine Federkammer 25 ausgebildet, in die ein in Axialrichtung der Welle 11 verlaufender Hydraulikkanal 23 mündet. Von der Außenseite des axialen Endes der Welle 11 erstreckt sich ein Kolben 17 durch die Federkammer 25 hindurch bis in den Hydraulikkanal 23, wobei am vorderen, in den Hydraulikkanal 23 eingreifenden Ende des Kolbens 17 eine Dichtung 24 angeordnet ist. Innerhalb der Federkammer 25 ist am Kolben 17 ein Kragen 18 ausgebildet, an dem sich eine Feder 19 abstützt, die mit ihrem entgegengesetzten Ende an der axialen Wandung der Federkammer anliegt. Die Feder 19 übt auf den Kolben 17 eine ihn in Richtung des Hydraulikkanals 23, d.h. gemäß Figur 1 nach links beaufschlagende Vorspannkraft auf. An seinem außenliegenden freien Ende ist der Kolben 17 über einen Bügel 21 mit einer Hydraulikeinheit 20 verbunden, durch deren Betätigung der Kolben 17 entgegen der Kraft der Feder 19 gemäß Figur 1 nach rechts verschoben werden kann.

Der Hydraulikkanal 23 erstreckt sich axial durch die Welle 11 bis in den Bereich des verstellbaren Kettenrades 15. Dort mündet er über eine Radialbohrung 23a in einen im Kettenrad 15 ausgebildeten Ringkanal 27, der auf beiden Seiten durch an der Welle gehaltene Ringdichtungen 26 axial abgedichtet ist. Der Ringkanal 27 steht über einen Verbindungskanal 28 mit einer Ringkammer 29 in Verbindung, die ebenfalls in dem Kettenrad 25 ausgebildet ist. Zwischen der Außenoberfläche der Welle 11 und der Ringkammer 30 erstreckt sich eine Membran 30, die bei Aufbringung eines erhöhten Drucks in der Ringkammer 29 gegen die Oberfläche der Welle 11 gespannt wird.

Um das Kettenrad 15 gegen eine Drehung sperren zu können, ist in diesem eine Bohrung 15a ausgebildet, in die ein Arretierungsstift 16 einführbar ist.

Im normalen Betriebszustand der Verpackungsmaschine übt die Feder 19 über den Kragen 18 eine Spannkraft auf den Kolben 17 aus, wodurch dieser das im Hydraulikkanal 23 befindliche Hydrauliköl unter Druck setzt. Dieser Druck liegt über die Radialbohrung 23a, den Ringkanal 27 und den Verbindungskanal 28 auch in der Ringkammer 29 vor, wodurch die Membran 30 gegen die Welle 11 gespannt ist, so daß das Kettenrad 15 auf der Welle gehalten ist und mit dieser zusammen dreht. Um die Relativstellungen zwischen den Kettenrädern 13 und 15 zu verändern, wird zunächst der Arretierungsstift 16 in die Bohrung 15a des Kettenrades 15 eingeführt, wodurch dieses ortsfest gehalten ist. Daraufhin wird die Hydraulikeinheit aktiviert, wodurch der Kolben 17 entgegen der Kraft der Feder 19 gemäß Figur 1 nach rechts verschoben wird, so daß der Druck im Hydraulikkanal 23 und somit der Ringkammer 29 verringert wird, wodurch die Verspannung zwischen der Membran 30 und der Außenoberfläche der Welle 11 aufgehoben wird. Durch Aktivierung des zentralen Antriebs der Verpackungsmaschine kann somit die Welle 11 zusammen mit dem an ihr festgelegten Kettenrad 13 gedreht werden, während das lösbare Kettenrad 15 aufgrund des Eingriffs des Arretierungsstiftes 16 in die Bohrung 15a stehen bleibt. Dadurch ergibt sich eine Änderung der Relativpositionen zwischen den Kettenrädern 13 und 15, so daß diese auf das neue Format des Füllgutes und/oder der Verpackung eingestellt werden können.

Nach Beendigung der Verstellbewegung wird die Hydraulikeinheit 20 deaktiviert, wodurch der Kolben 17 aufgrund der Kraft der Feder 19 in seine Normalstellung zurückkehrt und den Hydraulikdruck in dem Hydraulikkanal 23 und der Ringkammer 29 soweit erhöht, daß die Membran 30 sich gegen die Welle 11 spannt und das Kettenrad 15 auf dieser festhält. Nachdem der Arretierungsstift 16 aus der Bohrung 15a herausgezogen ist, ist der Umstellvorgang beendet.

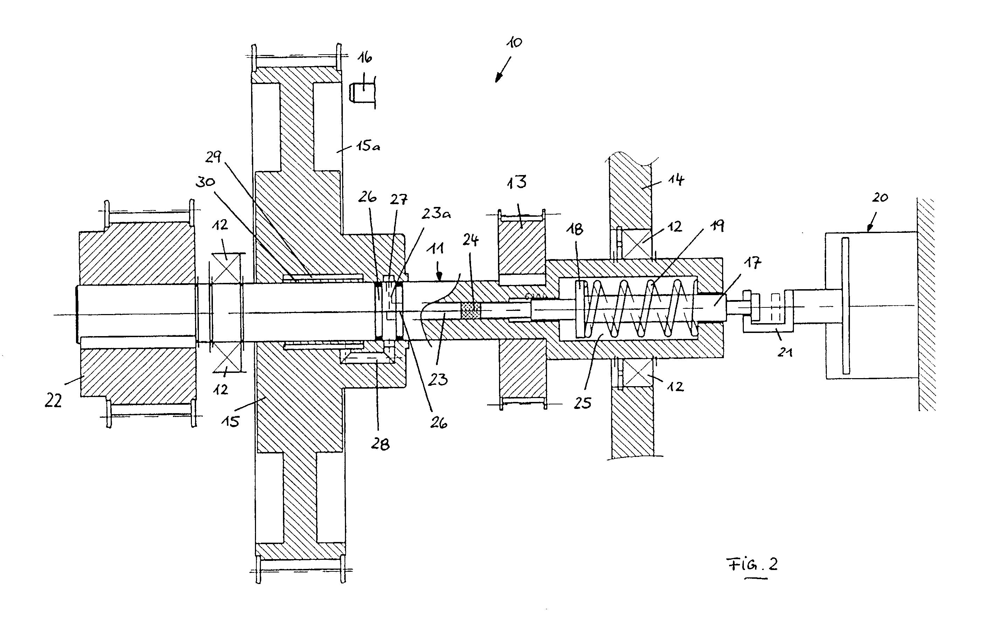

Das in Figur 2 dargestellte Ausführungsbeispiel entspricht in seinem grundsätzlichen Aufbau dem Ausführungsbeispiel gemäß Figur 1, wobei gleiche oder gleichartige Bauteile mit entsprechenden Bezugszeichen wie in Figur 1 versehen sind. Bei dem Aufbau gemäß Figur 2 sind neben einer verstellbaren Riemenscheibe 15, die den bereits anhand des gleichartigen Kettenrads 15 in Fig. 1 erläuterten Aufbau besitzt, an der Welle 11 zwei weitere Riemenscheiben 13 und 22 fest angebracht. Dabei kann es sich beispielsweise um die Antriebsräder für den Prospektfalzapparat sowie das Antriebsrad für die Prospektzangenkette handeln. Da diese beiden Riemenscheiben 13 und 22 fest mit der Welle 11 verbunden sind, behalten sie ihre gegenseitige Relativposition auch dann bei, wenn die Welle 11 relativ zur Riemenscheibe 15 verstellt wird, so daß der Synchronlauf der mit den beiden Riemenscheiben 13 und 22 gekoppelten Baueinheiten auch nach der Formatverstellung gewährleistet ist.

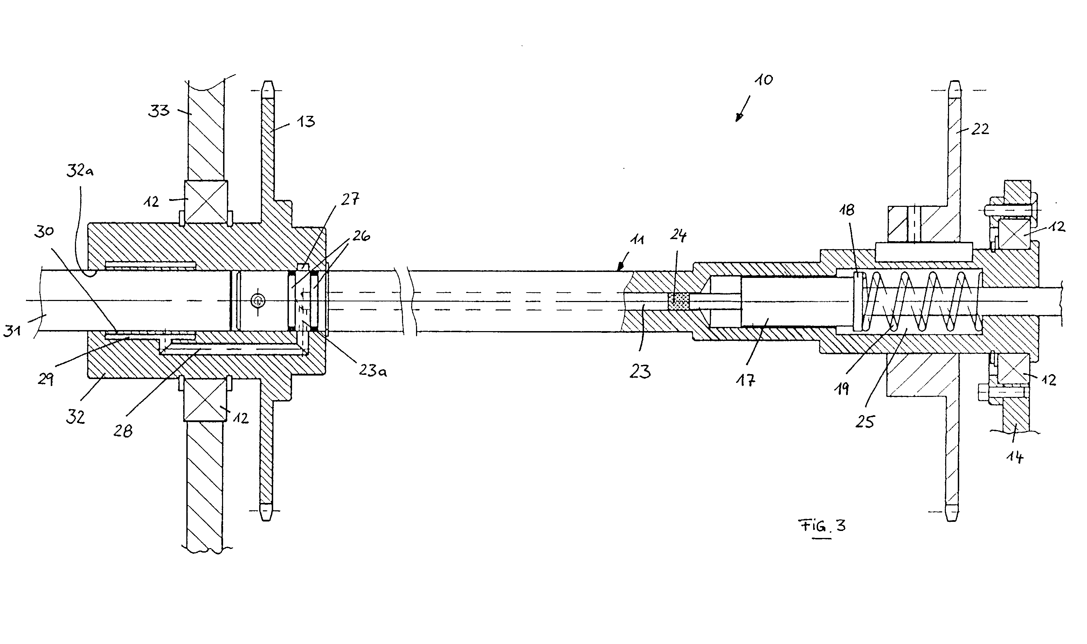

Während bei den Ausgestaltungen gemäß den Figuren 1 und 2 jeweils ein Kettenrad bzw. eine Riemenscheibe direkt auf die Welle gespannt wird, ist in Figur 3 eine alternative Ausgestaltung vorgesehen, bei der zwei koaxiale Wellenteile 11 und 31 relativ zueinander verstellt werden. Auch in Figur 3 sind Bauteile, die bereits in Zusammenhang mit Figur 1 erläutert wurden, mit entsprechenden Bezugszeichen versehen.

Das erste Wellenteil 11, das an seinem gemäß Figur 3 rechten Ende in bereits erläuterter Weise den Kolben 17 mit der Feder 19 aufnimmt, trägt an seinem entgegengesetzten, gemäß Figur 3 linken Ende eine Spannhülse 32, die fest an dem Wellenteil 11 angebracht und zusätzlich mit einem angeformten Kettenrad 13 versehen ist. Die Spannhülse 32 ist zusammen mit dem Wellenteil 11 über Lager 12 in einem Gehäuseteil 33 drehbar gelagert.

In eine Aufnahme 32a der Spannhülse 32 ist ein Ende eines weiteren Wellenteils 31 derart einführbar, daß die beiden Wellenteile 11 und 31 koaxial zueinander angeordnet sind, wobei das Wellenteil 31 in der Spannhülse 32 drehbar ist.

Der im Wellenteil 11 ausgebildete axiale Hydraulikkanal 23 steht in oben erläuterter Weise mit einer Ringkammer 29 der Spannhülse 32 in Verbindung, der eine umlaufende Membran 30 zugeordnet ist. Durch Erhöhung des Hydraulikdrucks in der Ringkammer 29 kann die Membran 30 gegen die Außenseite des weiteren Wellenteils 31 gespannt werden, wodurch die beiden Wellenteile 11 und 31 fest miteinander verbunden und im Normalbetrieb der Verpackungsmaschine als Einheit gedreht werden.

Zur Formatanpassung wird die von der Membran 30 aufgebrachte Spannkraft verringert, so daß das Wellenteil 11 relativ zum Wellenteil 31 verdreht werden kann. Nach Erreichen der gewünschten Verstellposition werden die beiden Wellenteile 11 und 31 durch Erhöhung des Drucks in der Ringkammer 29 wieder miteinander fest verspannt.

## Patentansprüche

1. Fördervorrichtung in einer Verpackungsmaschine, mit mehreren endlos umlaufenden Zugmitteln, die jeweils über zumindest ein Antriebsrad (13,15) verlaufen, wobei die Antriebsräder auf einer sie tragenden Welle (11) in Umfangsrichtung relativ zueinander verstellbar sind, gekennzeichnet durch eine hydraulische Spannvorrichtung (17, 19, 30), mittels der die Antriebsräder (13, 15) in Umfangsrichtung relativ zueinander festlegbar sind, und durch eine Löseeinheit (20), mittels der die Spannvorrichtung (17, 19, 30) deaktivierbar ist.

2. Fördervorrichtung nach Anspruch 1, dadurch gekennzeichnet, daß die Zugmittel Förderketten und die Antriebsräder Kettenräder sind.

3. Fördervorrichtung nach Anspruch 1, dadurch gekennzeichnet, daß die Zugmittel Zahnriemen und die Antriebsräder Riemenscheiben sind.

4. Fördervorrichtung nach einem der Ansprüche 1 bis 3, dadurch gekennzeichnet, daß die Antriebsräder (13, 15) auf einer gemeinsamen durchgehend ausgebildeten Welle (11) angeordnet sind und daß zumindest eines der Antriebsräder mittels der hydraulischen Spannvorrichtung (17, 19, 30) radial auf die Welle (11) spannbar ist.

5. Fördervorrichtung nach einem der Ansprüche 1 bis 3, dadurch gekennzeichnet, daß die Antriebsräder auf koaxial angeordneten, in Umfangsrichtung relativ zueinander verstellbaren Wellenteilen (11, 31) angeordnet sind, die mittels der hydraulischen Spannvorrichtung (17, 19, 30) relativ zueinander festlegbar sind.

6. Fördervorrichtung nach einem der Ansprüche 1 bis 5, dadurch gekennzeichnet, daß die hydraulische Spannvorrichtung einen druckbelasteten Kolben (17) und einen in eine Druckkammer (29) mündenden Hydraulikkanal (23) aufweist, wobei der Druckkammer (29) ein Spannelement (30) zugeordnet ist, das mittels des in der Druckkammer (29) herrschenden Drucks gegen die Welle spannbar ist.

7. Fördervorrichtung nach Anspruch 6, dadurch gekennzeichnet, daß die Druckkammer (29) in dem verstellbaren Antriebsrad (15) ausgebildet ist.

8. Fördervorrichtung nach Anspruch 5 und 6 oder 7, dadurch gekennzeichnet, daß die Druckkammer (29) in einer die beiden Wellenteile (11, 31) koaxial aufnehmenden Spannhülse (32) ausgebildet ist, die an einem der Wellenteile (11) festgelegt ist.

9. Fördervorrichtung nach Anspruch 8, dadurch gekennzeichnet, daß an der Spannhülse (32) ein Antriebsrad (13) angebracht ist.

10. Fördervorrichtung nach einem der Ansprüche 6 bis 9, dadurch gekennzeichnet, daß die Druckkammer (29) eine die Welle (11) umgebende Ringkammer ist.

11. Fördervorrichtung nach einem der Ansprüche 6 bis 10, dadurch gekennzeichnet, daß das Spannelement (30) eine die Druckkammer (29) gegenüber der Welle abgrenzende Membran ist.

12. Fördervorrichtung nach einem der Ansprüche 6 bis 11, dadurch gekennzeichnet, daß der Hydraulikkanal (23) axial in der Welle (11) verläuft.

13. Fördervorrichtung nach einem der Ansprüche 6 bis 12, daduch gekennzeichnet, daß der Kolben (17) von einer Feder (19) beaufschlagt ist.

14. Fördervorrichtung nach Anspruch 13, dadurch gekennzeichnet, daß die Feder (19) in einer in der Welle (11) ausgebildeten Federkammer (25) angeordnet ist.

15. Fördervorrichtung nach einem der Ansprüche 1 bis 14, dadurch gekennzeichnet, daß das verstellbare Antriebsrad (15) in der von der Welle (11) gelösten Stellung mittels einer Haltevorrichtung (16) arretierbar ist.

## Claims

1. Conveying device in a packing machine with several continuously rotating tension means, which in each case pass over at least one driving wheel (13, 15), the driving wheels being adjustable relative to one another in the circumferential direction on a shaft (11) carrying the same, characterized by a hydraulic clamping device (17, 19, 30) by means of which the driving wheels (13, 15) can be circumferentially fixed relative to one another, and by a release unit (20) by means of which the clamping device (17, 19, 30) can be deactivated.

2. Conveying device according to claim 1, characterized in that the tension means are conveying chains and the driving wheels sprocket wheels.

3. Conveying device according to claim 1, characterized in that the tension means are toothed belts and the driving wheels pulleys.

4. Conveying device according to one of the claims 1 to 3, characterized in that the driving wheels (13, 15) are placed on a common, through shaft (11) and that at least one of the driving wheels can be radially clamped to the shaft (11) by means of the hydraulic clamping device (17, 19, 30).

5. Conveying device according to one of the claims 1 to 3, characterized in that the driving wheels are placed on coaxially positioned shaft parts (11, 31) circumferentially adjustable relative to one another and fixable relative to one another by means of the hydraulic clamping device (17, 19, 30).

6. Conveying device according to one of the claims 1 to 5, characterized in that the hydraulic clamping device has a pressure-loaded piston (17) and a hydraulic channel (23) issuing into a pressure chamber (29) with which is associated a clamping element (30), which can be clamped to the shaft by means of the pressure prevailing in the pressure chamber (29).

7. Conveying device according to claim 6, characterized in that the pressure chamber (29) is constructed in the adjustable driving wheel (15).

8. Conveying device according to claim 5 and 6 or 7, characterized in that the pressure chamber (29) is constructed in a clamping sleeve (32) coaxially receiving the two shaft parts (11, 31) and which is fixed to one of the shaft parts (11).

9. Conveying device according to claim 8, characterized in that a driving wheel (13) is fitted to the clamping sleeve (32).

10. Conveying device according to one of the claims 6 to 9, characterized in that the pressure chamber (29) is an annular chamber surrounding the shaft (11).

11. Conveying device according to one of the claims 6 to 10, characterized in that the clamping element (30) is a diaphragm bounding the pressure chamber (29) with respect to the shaft.

12. Conveying device according to one of the claims 6 to 11, characterized in that the hydraulic channel (23) passes axially in the shaft (11).

13. Conveying device according to one of the claims 6 to 12, characterized in that the piston (17) is subject to the action of a spring (19).

14. Conveying device according to claim 13, characterized in that the spring (19) is located in a spring chamber (25) formed in the shaft (11).

15. Conveying device according to one of the claims 1 to 14, characterized in that the adjustable driving wheel (15) is locked by means of a retaining device (16) in the position released from the shaft (11).

## Revendications

1. Dispositif de convoyage dans une machine d'emballage, présentant plusieurs moyens d'entraînement à rotation continue passant chacun sur au moins une roue motrice (13,15), les roues motrices disposées sur un arbre porteur (11) étant réglables les unes par rapport aux autres dans le sens périmétrique, caractérisé par un dispositif de serrage hydraulique (17,19,30) au moyen duquel les roues motrices (13,15) peuvent être fixées dans le sens périmétriques les unes par rapport aux autres, et par une unité de desserrage (20), au moyen de laquelle le dispositif de serrage (17,19,30) peut être désactivé.

2. Dispositif de convoyage selon la revendication 1, caractérisé en ce que les moyens d'entraînement consistent en des chaînes à raclettes et les roues motrices en des roues dentées à chaînes.

3. Dispositif de convoyage selon la revendication 1, caractérisé en ce que les moyens d'entraînement consistent en des courroies crantées et les roues motrices en des poulies à courroie.

4. Dispositif de convoyage selon l'une quelconque des revendications 1 à 3, caractérisé en ce que les roues motrices (13,15) sont disposées sur un arbre (11) commun ininterrompu et en ce qu'au moins une des roues motrices peut être serrée radialement sur l'arbre (11) au moyen du dispositif de serrage hydraulique (17,19,30).

5. Dispositif de convoyage selon l'une quelconque des revendications 1 à 3, caractérisé en ce que les roues motrices sont disposées sur des bouts d'arbre (11,31) coaxiaux, réglables les uns par rapport aux autres dans le sens périmétrique, bouts d'arbre pouvant être fixés les uns par rapport aux autres au moyen du dispositif de serrage hydraulique (17,19,30).

6. Dispositif de convoyage selon l'une quelconque des revendications 1 à 5, caractérisé en ce que le dispositif de serrage hydraulique présente un piston (17) précontraint et un canal hydraulique (23) débouchant dans une chambre de pression (29), dans lequel un élément de serrage (30) est associé à la chambre de pression (29), élément pouvant être serré contre l'arbre au moyen de la pression existant dans la chambre de pression (29).

7. Dispositif de convoyage selon la revendication 6, caractérisé en ce que la chambre de pression (29) est conformée dans la roue motrice (15) réglable.

8. Dispositif de convoyage selon l'une quelconque des revendications 5 et 6 ou 7, caractérisé en ce que la chambre de pression (29) est conformée dans un manchon de serrage (32) recevant coaxialement les deux bouts d'arbre (11,31), manchon fixé sur l'un des bouts d'arbre (11).

9. Dispositif de convoyage selon la revendication 8, caractérisé en ce qu'une roue motrice (13) est montée sur le manchon de serrage (32)

10. Dispositif de convoyage selon l'une quelconque des revendications 6 à 9, caractérisé en ce que la chambre de pression (29) consiste en une chambre annulaire entourant l'arbre (11).

11. Dispositif de convoyage selon l'une quelconque des revendications 6 à 10, caractérisé en ce que l'élément de serrage (30) consiste en une membrane délimitant la chambre de pression (29) par rapport à l'arbre.

12. Dispositif de convoyage selon l'une quelconque des revendications 6 à 11, caractérisé en ce que le canal hydraulique (23) s'étend axialement dans l'arbre (11).

13. Dispositif de convoyage selon l'une quelconque des revendications 6 à 12, caractérisé en ce que le piston (17) est rappelé par un ressort (19).

14. Dispositif de convoyage selon la revendication 13, caractérisé en ce que le ressort (19) est disposé dans une chambre à ressort (25) conformée dans l'arbre (11).

15. Dispositif de convoyage selon l'une quelconque des revendications 1 à 14, caractérisé en ce que la roue motrice réglable (15) peut être bloquée au moyen d'un dispositif de maintien (16) dans la position détachée de l'arbre (11).
